# EUROPÄISCHE PATENTSCHRIFT

(11) **EP 3 649 375 B1**
(45) Veröffentlichungstag und Bekanntmachung des Hinweises auf die Patenterteilung: **10.03.2021**
(21) Anmeldenummer: 18739468.9
(22) Anmeldetag: 25.06.2018
(51) Int. Cl.: F16H 3/66, B60K 1/00

(54) **GETRIEBEVORRICHTUNG FÜR EINEN ELEKTRISCHEN ANTRIEB EINES KRAFTFAHRZEUGS, SOWIE ELEKTRISCHER ANTRIEB FÜR EIN KRAFTFAHRZEUG**
TRANSMISSION DEVICE FOR AN ELECTRIC DRIVE OF A MOTOR VEHICLE, AND ELECTRIC DRIVE FOR A MOTOR VEHICLE
DISPOSITIF DE TRANSMISSION POUR UN ENTRAÎNEMENT ÉLECTRIQUE D'UN VÉHICULE À MOTEUR, ET ENTRAÎNEMENT ÉLECTRIQUE POUR UN VÉHICULE À MOTEUR

(30) Priorität: 01.07.2017 DE 102017006262
(43) Veröffentlichungstag der Anmeldung: 13.05.2020
(73) Patentinhaber: Daimler AG, 70372 Stuttgart (DE)
(72) Erfinder: SCHILDER, Tobias, 70794 Filderstadt (DE); HAERTER, Tobias, 70174 Stuttgart (DE); RIEDL, Klaus, 72074 Tübingen (DE)
(74) Vertreter: JENSEN & SON
(86) Internationale Anmeldenummer: PCT/EP2018/066875
(87) Internationale Veröffentlichungsnummer: WO 2019/007723

(56) Entgegenhaltungen:
- WO-A1-2014/029650
- DE-A1-102015 209 647
- DE-B3-102012 007 656
- JP-A- H0 526 309

## Beschreibung

Getriebevorrichtungen, die grundsätzlich für elektrische Antriebe geeignet sind oder aus denen geeignete Getriebevorrichtungen abgeleitet werden können, sind zum Beispiel aus der JP H05 26309 A, der DE 10 2012 007 656 B3, der WO 2014/029650 A1 oder der DE 10 2015 209 647 A1 bekannt.

Eine solche Getriebevorrichtung für einen elektrischen Antrieb eines Kraftfahrzeugs sowie ein solcher elektrischer Antrieb für ein Kraftfahrzeug, insbesondere für einen Kraftwagen wie beispielsweise einen Personenkraftwagen, sind beispielsweise auch bereits aus der DE 10 2015 209 647 A1 bekannt. Der elektrische Antrieb umfasst dabei wenigstens eine elektrische Maschine, welche einen Rotor aufweist. Die elektrische Maschine umfasst beispielsweise einen Stator, wobei der Rotor von dem Stator antreibbar und dadurch um eine Drehachse relativ zu dem Stator drehbar ist. Die Getriebevorrichtung, welche beispielsweise Bestandteil des elektrischen Antriebs ist, weist ein Gehäuse und wenigstens drei in dem Gehäuse angeordnete Planetenradsätze auf, welche jeweils ein Sonnenrad, einen Planetenträger und ein Hohlrad umfassen.

Außerdem umfasst die Getriebevorrichtung eine Eingangswelle, welche von dem Rotor der elektrischen Maschine antreibbar ist. Außerdem umfasst die Getriebevorrichtung eine Ausgangswelle, mittels welcher wenigstens ein Rad des Kraftfahrzeugs und somit beispielsweise das Kraftfahrzeug insgesamt antreibbar ist. Des Weiteren ist wenigstens ein erstes Schaltelement vorgesehen, mittels welchem das Hohlrad eines ersten der Planetenradsätze an dem Gehäuse festlegbar ist. Das Hohlrad des ersten Planetenradsatzes wird auch als erstes Hohlrad bezeichnet, wobei das Sonnenrad des ersten Planetenradsatzes auch als erstes Sonnenrad und der Planetenträger des ersten Planetenradsatzes auch als erster Planetenträger bezeichnet wird. Das Hohlrad des zweiten Planetenradsatzes ist permanent drehfest mit dem Planetenträger des ersten Planetenradsatzes gekoppelt, wobei das Hohlrad des zweiten Planetenradsatzes auch als zweites Hohlrad bezeichnet wird. Ferner wird beispielsweise das Sonnenrad des zweiten Planetenradsatzes als zweites Sonnenrad und der Planetenträger des zweiten Planetenradsatzes als zweiter Planetenträger bezeichnet.
Aufgabe der vorliegenden Erfindung ist es, eine Getriebevorrichtung und einen elektrischen Antrieb der eingangs genannten Art derart weiterzuentwickeln, dass ein besonders verlustarmer Betrieb und eine kompakte Bauweise realisierbar sind.

Diese Aufgabe wird durch eine Getriebevorrichtung mit den Merkmalen des Patentanspruchs 1 sowie durch einen elektrischen Antrieb mit den Merkmalen des Patentanspruchs 10 gelöst. Vorteilhafte Ausgestaltungen mit zweckmäßigen Weiterbildungen der Erfindung sind in den übrigen Ansprüchen angegeben.

Um eine Getriebevorrichtung der im Oberbegriff des Patentanspruchs 1 angegebenen Art derart weiterzuentwickeln, dass ein besonders verlustarmer Betrieb und eine besonders kompakte Bauweise realisierbar sind, ist es erfindungsgemäß vorgesehen, dass das Sonnenrad des dritten Planetenradsatzes permanent drehfest mit dem Hohlrad des zweiten Planetenradsatzes gekoppelt ist. Ferner ist das Sonnenrad des dritten Planetenradsatzes permanent drehfest mit der Ausgangswelle gekoppelt. Ferner ist erfindungsgemäß ein zweites Schaltelement vorgesehen, mittels welchem der zweite Planetenträger, das heißt der Planetenträger des zweiten Planetenradsatzes drehfest an dem Gehäuse festlegbar ist. Das jeweilige Sonnenrad, der jeweilige Planetenträger und das jeweilige Hohlrad sind jeweilige Getriebeelemente des jeweiligen Planetenradsatzes. Um auf besonders kompakte und verlustarme Weise eine besonders vorteilhafte Übersetzung der Getriebevorrichtung realisieren zu können, ist erfindungsgemäß ferner vorgesehen, dass das erste Sonnenrad, das heißt das Sonnenrad des ersten Planetenradsatzes permanent drehfest mit der Eingangswelle gekoppelt ist.
Um auf bauraumgünstige Weise eine besonders vorteilhafte Übersetzung zu realisieren, sodass ein besonders verlustarmer Betrieb darstellbar ist, ist ferner erfindungsgemäß der Planetenträger des dritten Planetenradsatzes, das heißt der dritte Planetenträger permanent drehfest mit dem zweiten Planetenträger, das heißt mit dem Planetenträger des zweiten Planetenradsatzes gekoppelt.

Im Folgenden wird das Sonnenrad des ersten Planetenradsatzes auch als erstes Sonnenrad oder erste Sonne bezeichnet, wobei der Planetenträger des ersten Planetenradsatzes auch als erster Planetenträger und das Hohlrad des ersten Planetenradsatzes auch als erstes Hohlrad bezeichnet wird. Das Sonnenrad des zweiten Planetenradsatzes wird auch als zweites Sonnenrad oder zweite Sonne bezeichnet, wobei der Planetenträger des zweiten Planetenradsatzes als zweiter Planetenträger und das Hohlrad des zweiten Planetenradsatzes auch als zweites Hohlrad bezeichnet wird. Demzufolge wird das Sonnenrad des dritten Planetenradsatzes auch als drittes Sonnenrad oder dritte Sonne bezeichnet, wobei der Planetenträger des dritten Planetenradsatzes als dritter Planetenträger und das Hohlrad des dritten Planetenradsatzes auch als drittes Hohlrad bezeichnet wird. Ferner wird der jeweilige Planetenträger auch als Steg bezeichnet.

Es können ein besonders verlustarmer Betrieb und eine kompakte Bauweise mittels der erfindungsgemäßen Getriebevorrichtung realisiert werden, da die Planetenradsätze, welche auch als Radsätze bezeichnet werden, eine besonders vorteilhafte Gesamtübersetzung zur Verfügung stellen können, sodass kein weiterer Endantrieb, welcher auch als Final Drive bezeichnet wird, erforderlich ist. Außerdem können die Teileanzahl und somit das Gewicht, die Kosten und der Bauraumbedarf der Getriebevorrichtung besonders gering gehalten werden, wobei gleichzeitig eine besonders vorteilhafte Übersetzung realisierbar ist.

Unter einer drehfesten Kopplung zweier Elemente ist zu verstehen, dass die beiden Elemente im gekoppelten Zustand nicht gegeneinander verdreht werden können. Das heißt, dass im drehfest gekoppelten Zustand die beiden Elemente mit gleicher Winkelgeschwindigkeit um eine gemeinsame Achse drehen, wobei bei einer drehfesten Festlegung die Winkelgeschwindigkeit null ist.

Unter einer jeweiligen Festlegung des jeweiligen Getriebeelements an dem Gehäuse ist insbesondere zu verstehen, dass das an dem Gehäuse festgelegte Getriebeelement sich nicht relativ zu dem Gehäuse drehen kann. Das jeweilige Schaltelement ist dabei beispielsweise zwischen wenigstens einer Sperrstellung beziehungsweise einem Sperrzustand und wenigstens einer Offenstellung beziehungsweise einem Offenszustand verstellbar. In der jeweiligen Offenstellung gibt beispielsweise das erste Schaltelement das erste Hohlrad frei, sodass sich das erste Hohlrad um eine Drehachse, insbesondere um eine Hauptdrehachse, der Getriebevorrichtung relativ zu dem Gehäuse drehen kann. In der Offenstellung des zweiten Schaltelement gibt das zweite Schaltelement den zweiten Planetenträger frei, sodass sich der zweite Planetenträger um eine Drehachse, insbesondere um die genannte Hauptdrehachse, relativ zu dem Gehäuse drehen kann, insbesondere dann, wenn über die Eingangswelle Drehmomente in die Getriebevorrichtung eingeleitet werden. In der Sperrstellung des ersten Schaltelements ist das erste Hohlrad mittels des ersten Schaltelements an dem Gehäuse festgelegt, sodass sich dann das erste Hohlrad nicht mehr um die Hauptdrehachse relativ zu dem Gehäuse drehen kann. Demzufolge ist in der Sperrstellung des zweiten Schaltelements der zweite Planetenträger mittels des zweiten Schaltelements drehfest an dem Gehäuse festgelegt, sodass sich der zweite Planetenträger nicht nur um die Hauptdrehachse relativ zu dem Gehäuse drehen kann. Unter der jeweiligen Festlegung des jeweiligen Getriebeelements an dem Gehäuse ist somit zu verstehen, dass das jeweilige, an dem Gehäuse festgelegte, insbesondere drehfest festgelegte, Getriebeelement gegen eine Drehung relativ zu dem Gehäuse, insbesondere um die Hauptdrehachse, gesichert ist. Die Hauptdrehachse ist beispielsweise eine zentrale Drehachse der Getriebevorrichtung, wobei sich beispielsweise das jeweilige Getriebeelement dann, wenn es nicht an dem Gehäuse festgelegt ist, um die Hauptdrehachse relativ zu dem Gehäuse drehen kann, insbesondere dann, wenn Drehmomente, insbesondere über die Eingangswelle, in die Getriebevorrichtung eingeleitet werden.

Durch die Verwendung des zweiten Schaltelements kann eine besonders vorteilhafte Schaltfähigkeit, insbesondere Lastschaltfähigkeit, der Getriebevorrichtung realisiert werden, sodass beispielsweise eine besonders vorteilhafte Anzahl an schaltbaren, insbesondere lastschaltfähigen, Gängen dargestellt werden kann. Ferner ist durch die Verwendung des zweiten Schaltelements eine besonders vorteilhafte Übersetzung realisierbar, sodass ein besonders vorteilhafter, verlustarmer Betrieb sowie eine besonders kompakte Bauweise dargestellt werden können.

Unter einer jeweiligen, permanent drehfesten Kopplung eines der Getriebeelemente mit einem weiteren Bauteil wie beispielsweise dem Gehäuse oder einem anderen Bauteil der Getriebevorrichtung ist insbesondere zu verstehen, dass kein Schaltelement vorgesehen ist, mittels welchem die permanente drehfeste Kopplung aufgehoben werden könnte. Ein Merkmal der in Anspruch 1 beanspruchten Erfindung zeichnet sich dadurch aus, dass der erste Planetenträger, das heißt der Planetenträger des ersten Planetenradsatzes, permanent drehfest mit der Abtriebswelle gekoppelt ist. Hierdurch kann eine besonders kompakte Bauweise und ein besonders verlustarmer Betrieb dargestellt werden.

In vorteilhafter Ausgestaltung der Erfindung ist das erste Schaltelement als reibschlüssige Kupplung ausgebildet. Hierdurch kann die Getriebevorrichtung lastschaltfähig sein, das heißt unter Last geschaltet werden, sodass ein besonders vorteilhafter Betrieb darstellbar ist. Insbesondere ist es möglich, die erfindungsgemäße Getriebevorrichtung als schaltfähige, insbesondere als lastschaltfähige, Drei-Gang-Struktur zu realisieren, welche besonders vorteilhaft für elektrische Antriebe verwendet werden kann. Dabei kann eine koaxiale und bauraumoptimale Bauweise dargestellt werden, wobei Verlustleistungen der Getriebevorrichtung in einem besonders geringen Rahmen gehalten werden können. Mit anderen Worten ist es beispielsweise möglich, auf besonders gewichts- und bauraumgünstige sowie verlustarme Weise mehrere, schaltbare, insbesondere lastschaltbare, Gänge der Getriebevorrichtung zu realisieren, wobei beispielsweise besonders vorteilhaft wenigstens oder genau drei Gänge realisiert werden können. Durch die Ausgestaltung des Schaltelements, welches auch als erstes Schaltelement bezeichnet wird, als reibschlüssige Kupplung ist das erste Schaltelement beispielsweise als Bremse, insbesondere als Reibbremse, ausgebildet. Insbesondere kann das erste Schaltelement beispielsweise als Reib- beziehungsweise Lamellenkupplung ausgebildet sein.

Eine weitere Ausführungsform zeichnet sich dadurch aus, dass das zweite Schaltelement als formschlüssige Kupplung ausgebildet ist. Dabei ist beispielsweise das zweite Schaltelement als Klauenkupplung ausgebildet. Durch die Verwendung einer solchen formschlüssigen Kupplung können Verluste in einem besonders geringen Rahmen gehalten werden, sodass ein besonders hoher Wirkungsgrad darstellbar ist.

Dabei hat es sich zur Realisierung eines besonders vorteilhaften und insbesondere effizienten Betriebs als vorteilhaft erwiesen, wenn ein weiteres beziehungsweise drittes Schaltelement vorgesehen ist, mittels welchem das Hohlrad des dritten Planetenradsatzes, das heißt das dritte Hohlrad an dem Gehäuse festlegbar ist. Die vorigen und folgenden Ausführungen zu dem ersten Schaltelement und/oder zu dem zweiten Schaltelement können ohne weiteres auch auf das weitere beziehungsweise dritte Schaltelement übertragen werden und umgekehrt. Somit ist beispielsweise das weitere Schaltelement zwischen wenigstens einer Sperrstellung und wenigstens einer Offenstellung verstellbar. In der Offenstellung gibt das dritte Schaltelement das dritte Hohlrad frei, sodass sich das dritte Hohlrad, insbesondere um die Hauptdrehachse, relativ zu dem Gehäuse drehen kann, insbesondere dann, wenn Drehmomente in die Getriebevorrichtung, insbesondere über die Eingangswelle, eingeleitet werden. In der Sperrstellung jedoch ist das dritte Hohlrad mittels des weiteren Schaltelements drehfest an dem Gehäuse festgelegt, sodass sich das dritte Hohlrad nicht um die Hauptdrehachse relativ zu dem Gehäuse drehen kann, insbesondere auch dann nicht, wenn die Getriebevorrichtung angetrieben wird, das heißt wenn die Drehmomente in die Getriebevorrichtung eingeleitet werden.

Um dabei einen besonders verlustarmen Betrieb realisieren zu können, hat es sich als vorteilhaft gezeigt, wenn das weitere Schaltelement als formschlüssige Kupplung, das heißt beispielsweise als Klauenkupplung, ausgebildet ist.

Eine weitere Ausführungsform zeichnet sich dadurch aus, dass ein Kopplungselement vorgesehen ist, mittels welchem der dritte Planetenträger, das heißt der Planetenträger des dritten Planetenradsatzes, mit dem Planetenträger des zweiten Planetenradsatzes, das heißt mit dem zweiten Planetenträger, insbesondere drehfest, koppelbar ist. Das Kopplungselement ist beispielsweise zwischen wenigstens einem Kopplungszustand und wenigstens einem Entkopplungszustand verstellbar.

Dem Kopplungszustand ist der dritte Planetenträger mittels des Kopplungselements drehfest mit dem zweiten Planetenträger gekoppelt beziehungsweise verbunden, sodass insbesondere dann, wenn die Getriebevorrichtung angetrieben wird, der dritte Planetenträger und der zweite Planetenträger gemeinsam und somit als Block und die Hauptdrehachse umlaufen und sich somit um die Hauptdrehachse relativ zu dem Gehäuse drehen. In dem Entkopplungszustand jedoch gibt das Kopplungselement den dritten Planetenträger und den zweiten Planetenträger frei, sodass sich diese beispielsweise dann, wenn die Getriebevorrichtung angetrieben wird, um die Hauptdrehachse relativ zueinander und jeweils relativ zu dem Gehäuse drehen können.

Dabei hat es sich zur Realisierung eines effizienten und effektiven Betriebs als besonders vorteilhaft gezeigt, wenn das dritte Hohlrad, das heißt das Hohlrad des dritten Planetenradsatzes permanent drehfest mit dem Gehäuse gekoppelt und somit drehfest an dem Gehäuse festgelegt ist.

Um dabei die Verluste besonders gering halten zu können, ist das Kopplungselement beispielsweise als formschlüssige Kupplung und somit beispielsweise als Klauenkupplung ausgebildet.

In weiterer besonders vorteilhafter Ausgestaltung der Erfindung ist der dritte Planetenradsatz radial außerhalb des zweiten Planetenradsatzes angeordnet. Mit anderen Worten sind beispielsweise der dritte Planetenradsatz und der zweite Planetenradsatz gestapelt, sodass beispielsweise der zweite Planetenradsatz in radialer Richtung der Getriebevorrichtung nach außen zumindest teilweise, insbesondere zumindest überwiegend oder vollständig, durch den dritten Planetenradsatz überdeckt ist. Somit ist beispielsweise das zweite Planetenrad in axialer Richtung der Getriebevorrichtung zumindest teilweise, insbesondere zumindest überwiegend oder vollständig, in dem dritten Planetenradsatz angeordnet. Dadurch kann der Bauraumbedarf der Getriebevorrichtung, insbesondere in axialer Richtung der Getriebevorrichtung, besonders gering gehalten werden.

Alternativ oder zusätzlich ist es zur Realisierung einer besonders kompakten Bauweise vorgesehen, dass der zweite Planetenradsatz und der dritte Planetenradsatz in einer gemeinsamen Ebene angeordnet sind.

Gemäß Anspruch 10 ist die Getriebevorrichtung eines erfindungsgemäßen elektrischen Antriebs als erfindungsgemäße Getriebevorrichtung ausgebildet. Vorteile und vorteilhafte Ausgestaltungen der erfindungsgemäßen Getriebevorrichtung sind dabei als Vorteile und vorteilhafte Ausgestaltungen des erfindungsgemäßen elektrischen Antriebs anzusehen und umgekehrt.

Schließlich hat es sich als besonders vorteilhaft gezeigt, wenn eine zu einem beziehungsweise zu dem Rad des Kraftfahrzeugs führende Seitenwelle, über welche beispielsweise das Rad von der Getriebevorrichtung und über diese von der elektrischen Maschine antreibbar sein kann, koaxial zu der genannten zentralen Drehachse der Getriebevorrichtung angeordnet ist. Somit ist beispielsweise die Seitenwelle koaxial zu der Getriebevorrichtung an diese, insbesondere an die Ausgangswelle, angebunden. Dabei ist es denkbar, dass die Seitenwelle zentral durch die Mitte zurückgeführt ist.

Ist das jeweilige Schaltelement beziehungsweise das Kopplungselement als reibschlüssige Kupplung ausgebildet, so ist das Schaltelement beziehungsweise das Kopplungselement beispielsweise als Lamellenbremse oder aber als Bremsband ausgebildet. Hierdurch kann auf besonders vorteilhafte Weise eine Lastschaltfähigkeit realisiert werden.

Um den Bauraumbedarf, die Teileanzahl, das Gewicht und die Kosten der Getriebevorrichtung beziehungsweise des elektrischen Antriebs besonders gering halten zu können, ist es vorzugsweise vorgesehen, dass das zweite Hohlrad eine Außenverzahnung aufweist, durch welche das dritte Sonnenrad gebildet ist.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine schematische Darstellung eines erfindungsgemäßen elektrischen Antriebs gemäß einer ersten Ausführungsform für ein Kraftfahrzeug;
- Fig. 2: eine schematische Darstellung einer Getriebevorrichtung des elektrischen Antriebs gemäß einer zweiten Ausführungsform; und
- Fig. 3: eine schematische Darstellung der Getriebevorrichtung gemäß einer dritten Ausführungsform.

In den Fig. sind gleiche oder funktionsgleiche Elemente mit gleichen Bezugszeichen versehen.

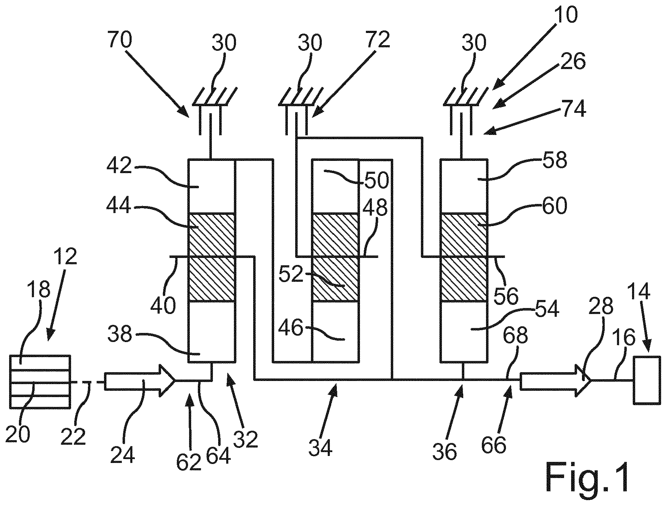

Fig. 1 zeigt in einer schematischen Darstellung eine erste Ausführungsform eines elektrischen Antriebs 10 für ein Kraftfahrzeug, insbesondere für einen Kraftwagen wie beispielsweise einen Personenkraftwagen. Das Kraftfahrzeug ist beispielsweise als Hybrid- oder Elektrofahrzeug ausgebildet und mittels des elektrischen Antriebs 10 antreibbar, das heißt elektrisch antreibbar. Hierzu umfasst der elektrische Antrieb 10 wenigstens eine in Fig. 1 besonders schematisch dargestellte elektrische Maschine 12, mittels welcher wenigstens ein in Fig. 1 besonders schematisch dargestelltes Rad 14 des Kraftfahrzeugs elektrisch antreibbar ist. Das Rad 14 kann dabei Bestandteil des elektrischen Antriebs 10 sein, wobei das Rad 14 beispielsweise über eine in Fig. 1 besonders schematisch dargestellte Seitenwelle 16 von der elektrischen Maschine 12 antreibbar ist. Durch Antreiben des Rads 14 kann beispielsweise mittels der elektrischen Maschine 12 das Kraftfahrzeug insgesamt angetrieben werden. Alternativ oder zusätzlich ist es denkbar, dass mittels der elektrischen Maschine 12 das Rad 14 und wenigstens ein in den Fig. nicht dargestelltes, weiteres Rad des Antriebs 10 beziehungsweise des Kraftfahrzeugs antreibbar ist, wodurch das Kraftfahrzeug insgesamt elektrisch angetrieben werden kann.

Die elektrische Maschine 12 umfasst dabei einen Stator 18 und einen Rotor 20, welcher von dem Stator 18 antreibbar und dadurch um eine Drehachse 22 relativ zu dem Stator 18 drehbar ist. Die elektrische Maschine 12 ist somit beispielsweise in einem Motorbetrieb und somit als Elektromotor betreibbar. In dem Motorbetrieb stellt die elektrische Maschine 12 über den Rotor 20 Drehmomente bereit, welche in Fig. 1 durch einen Pfeil 24 veranschaulicht sind und beispielsweise auch als erste Drehmomente bezeichnet werden.

Der elektrische Antrieb 10 umfasst ferner eine Getriebevorrichtung 26, über welche beispielsweise das Rad 14 von der elektrischen Maschine 12 angetrieben werden kann. Hierzu können beispielsweise die von der elektrischen Maschine 12 über den Rotor 20 bereitgestellten und in Fig. 1 durch den Pfeil 24 veranschaulichten Drehmomente in die Getriebevorrichtung 26 eingeleitet werden, wodurch die Getriebevorrichtung 26 angetrieben wird. Mittels der Getriebevorrichtung 26 kann beispielsweise das jeweilige, in die Getriebevorrichtung 26 eingeleitete erste Drehmoment in ein demgegenüber unterschiedliches zweites Drehmoment umgewandelt werden, welches in Fig. 1 beispielsweise durch einen Pfeil 28 veranschaulicht ist. Mit anderen Worten kann die Getriebevorrichtung 26 durch den Pfeil 28 veranschaulichte, zweite Drehmomente bereitstellen, welche aus den von der elektrischen Maschine 12 bereitgestellten ersten Drehmomenten resultieren. Dabei kann das Rad 14 mittels der zweiten Drehmomente angetrieben werden. Beispielsweise je nach Übersetzung, insbesondere je nach eingelegter beziehungsweise aktivierter Übersetzung, der Getriebevorrichtung 26 können das jeweilige erste Drehmoment und das jeweilige zweite Drehmoment voneinander unterschiedliche Werte aufweisen, insbesondere dann, wenn die jeweilige, aktivierte beziehungsweise eingelegte Übersetzung von 1 unterschiedlich ist.

Die Getriebevorrichtung 26 umfasst ein in Fig. 1 besonders schematisch dargestelltes Gehäuse 30 sowie wenigstens oder vorzugsweise genau drei in dem Gehäuse 30 angeordnete Planetenradsätze 32, 34 und 36. Der Planetenradsatz 32 wird auch als erster Planetenradsatz bezeichnet, wobei der Planetenradsatz 34 auch als zweiter Planetenradsatz und der Planetenradsatz 36 auch als dritter Planetenradsatz bezeichnet wird. Der erste Planetenradsatz 32 weist ein erstes Sonnenrad 38, einen ersten Planetenträger 40 und ein erstes Hohlrad 42 auf. Ferner umfasst der erste Planetenradsatz 32 wenigstens ein erstes Planetenrad 44, welches drehbar an dem ersten Planetenträger 40 gelagert ist. Der erste Planetenträger 40 wird auch als erster Steg bezeichnet. Das Planetenrad 44 kämmt sowohl mit dem Sonnenrad 38 als auch mit dem Hohlrad 42.

Der zweite Planetenradsatz 34 umfasst ein zweites Sonnenrad 46, einen zweiten Planetenträger 48 und ein zweites Hohlrad 50. Außerdem umfasst der zweite Planetenradsatz 34 wenigstens ein zweites Planetenrad 52, welches drehbar an dem auch als zweiter Steg bezeichneten Planetenträger 48 gelagert ist. Dabei kämmt das Planetenrad 52 sowohl mit dem Sonnenrad 46 als auch mit dem Hohlrad 50. Der dritte Planetenradsatz 36 umfasst ein drittes Sonnenrad 54, einen dritten Planetenträger 56 und ein drittes Hohlrad 58. Ferner umfasst der dritte Planetenradsatz 36 wenigstens ein drittes Planetenrad 60, welches drehbar an dem auch als dritter Steg bezeichneten dritten Planetenträger 56 gelagert ist. Dabei kämmt das Planetenrad 60 sowohl mit dem Sonnenrad 54 als auch mit dem Hohlrad 58. Das jeweilige Sonnenrad 38, 46 beziehungsweise 54 wird auch einfach als Sonne bezeichnet. Die jeweiligen Sonnenräder 38, 46 und 54, die jeweiligen Planetenträger 40, 48 und 56 und die jeweiligen Hohlräder 42, 50 und 58 sind jeweilige Getriebeelemente beziehungsweise werden auch als Getriebeelemente der Planetenradsätze 32, 34 und 36 bezeichnet. Sind die Getriebeelemente nicht an dem Gehäuse 30 festgelegt, das heißt nicht drehfest mit dem Gehäuse 30 verbunden beziehungsweise gekoppelt, so können sich insbesondere dann, wenn die Getriebevorrichtung 26 angetrieben wird, die Getriebeelemente um die Drehachse 22 relativ zu dem Gehäuse 30 drehen. Die Drehachse 22 ist somit eine zentrale Drehachse, welche auch als Hauptdrehachse der Getriebevorrichtung 26 bezeichnet wird. Dabei fällt die Hauptdrehachse mit der axialen Richtung der Getriebevorrichtung 26 zusammen. Bei der in Fig. 1 veranschaulichten ersten Ausführungsform ist es vorgesehen, dass die Planetenradsätze 32, 34 und 36 in axialer Richtung hintereinander beziehungsweise aufeinanderfolgend angeordnet sind, sodass keine der Planetenradsätze 32, 34 und 36 gestapelt sind.

Die Getriebevorrichtung 26 weist dabei einen Antrieb 62 auf, über welchen die von der elektrischen Maschine 12 bereitgestellten Drehmomente in die Getriebevorrichtung 26 einleitbar sind beziehungsweise eingeleitet werden. Hierzu weist der auch als Eingang bezeichnete Antrieb 62 eine auch als Antriebswelle bezeichnete Eingangswelle 64 auf, welche von dem Rotor 20 und somit von der elektrischen Maschine 12 antreibbar ist. Hierzu ist beispielsweise die Eingangswelle 64 drehfest mit dem Rotor 20 gekoppelt beziehungsweise koppelbar, sodass die von der elektrischen Maschine 12 mit dem Rotor 20 bereitgestellten Drehmomente auf die Eingangswelle 64 übertragen und dadurch über die Eingangswelle 64 in die Getriebevorrichtung 26 eingeleitet werden können. Außerdem weist die Getriebevorrichtung 26 einen Abtrieb 66 auf, welcher eine Ausgangswelle 68 aufweist. Der Abtrieb 66 wird auch als Ausgang bezeichnet, wobei die Ausgangswelle 68 auch als Abtriebswelle bezeichnet wird. Über den Abtrieb 66 beziehungsweise über die Ausgangswelle 68 kann die Getriebevorrichtung 26 die zweiten Drehmomente bereitstellen, sodass das Rad 14 von der Ausgangswelle 68 antreibbar ist. Hierzu ist beispielsweise das Rad 14 drehfest mit der Ausgangswelle 68 gekoppelt oder koppelbar. Insbesondere kann vorgesehen sein, dass die Seitenwelle 16 drehfest mit der Ausgangswelle 68 koppelbar oder gekoppelt ist, wobei beispielsweise das Rad 14 drehfest mit der Seitenwelle 16 gekoppelt oder koppelbar ist.

Bei einer vorteilhaften hier nicht dargestellten Ausführungsform ist zwischen der Ausgangswelle 68 und der Seitenwelle 16 ein Differentialgetriebe angeordnet.

Die Getriebevorrichtung 26 weist ein erstes Schaltelement 70 auf, mittels welchem das Hohlrad 42 an dem Gehäuse 30 drehfest festlegbar ist. Durch dieses drehfeste Festlegen des Hohlrads 42 an dem Gehäuse 30 wird das Hohlrad 42 gegen eine Drehung relativ zu dem Gehäuse 30 gesichert, sodass sich das Hohlrad 42 insbesondere auch dann nicht relativ zu dem Gehäuse 30 drehen kann, wenn die Getriebevorrichtung 26 angetrieben wird. Des Weiteren ist das Hohlrad 42 permanent drehfest mit dem Sonnenrad 46 gekoppelt beziehungsweise verbunden. Außerdem ist das Hohlrad 50 permanent drehfest mit dem Planetenträger 40 gekoppelt beziehungsweise verbunden.

Um nun einen besonders verlustarmen Betrieb und eine kompakte Bauweise der Getriebevorrichtung 26 und somit des elektrischen Antriebs 10 insgesamt realisieren zu können, ist das Sonnenrad 54 permanent drehfest mit dem Hohlrad 50 gekoppelt beziehungsweise verbunden. Außerdem ist das Sonnenrad 54 permanent drehfest mit der Ausgangswelle 68 gekoppelt beziehungsweise verbunden.

Das erste Schaltelement 70 ist beispielsweise als reibschlüssiges Schaltelement beziehungsweise als reibschlüssige Kupplung ausgebildet, sodass beispielsweise das erste Schaltelement 70 als Bremse ausgebildet ist. Dabei ist das erste Schaltelement 70 beispielsweise als Lamellenkupplung beziehungsweise als Lamellenbremse oder als Bremsband ausgebildet.

Die Getriebevorrichtung 26 umfasst darüber hinaus ein zweites Schaltelement 72, mittels welchem der Planetenträger 48 drehfest an dem Gehäuse 30 festlegbar ist. Dabei kann das zweite Schaltelement 72 als formschlüssige Kupplung, insbesondere als Klauenkupplung, ausgebildet sein. Ferner ist es denkbar, dass das zweite Schaltelement 72 als reibschlüssige Kupplung und somit beispielsweise als Lamellenbremse oder Bremsband ausgebildet ist. Das Sonnenrad 38 ist permanent drehfest mit der Eingangswelle 64 gekoppelt, sodass die von der elektrischen Maschine 12 bereitgestellte und auf die Eingangswelle 64 übertragenen ersten Drehmomente auf das Sonnenrad 38 übertragen und über dieses in die Getriebevorrichtung 26 eingeleitet werden.

Der Planetenträger 40 ist permanent drehfest mit der auch als Abtriebswelle bezeichneten Ausgangswelle 68 verbunden beziehungsweise gekoppelt. Des Weiteren ist der Planetenträger 56 permanent drehfest mit dem Planetenträger 48 gekoppelt beziehungsweise verbunden, sodass der Planetenträger 56 mittels des Schaltelements 72 drehfest an dem Gehäuse 30 festlegbar ist. Mit anderen Worten, wird beispielsweise der Planetenträger 48 mittels des Schaltelements 72 an dem Gehäuse 30 drehfest festgelegt, so wird gleichzeitig der Planetenträger 56 mittels des Schaltelements 72 drehfest an dem Gehäuse 30 festgelegt, da die Planetenträger 48 und 50 permanent drehfest miteinander verbunden sind.

Bei der in Fig. 1 veranschaulichten ersten Ausführungsform ist ein weiteres beziehungsweise drittes Schaltelement 74 vorgesehen, mittels welchem das Hohlrad 58 an dem Gehäuse 30 festlegbar ist. Beispielsweise ist das dritte Schaltelement 74 als formschlüssige Kupplung, insbesondere als Klauenkupplung, ausgebildet. Alternativ ist es denkbar, dass das Schaltelement 74 als reibschlüssige Kupplung und somit beispielsweise als Lamellenbremse oder Bremsband, ausgebildet ist.

Das jeweilige Schaltelement 70, 72 beziehungsweise 74 ist zwischen wenigstens einem Sperrzustand und wenigstens einem Offenzustand verstellbar, insbesondere bewegbar. In dem Sperrzustand des ersten Schaltelements 70 ist das Hohlrad 42 mittels des ersten Schaltelements 70 drehfest an dem Gehäuse 30 festgelegt, sodass sich das Hohlrad 42 nicht relativ zu dem Gehäuse 30 drehen kann. In dem Offenzustand jedoch gibt das erste Schaltelement 70 das Hohlrad 42 frei, sodass sich das Hohlrad 42 beispielsweise dann, wenn die Getriebevorrichtung 26 angetrieben wird, um die Hauptdrehachse relativ zu dem Gehäuse 30 drehen kann beispielsweise dreht.

Analoges gilt auch für die Schaltelemente 72 beziehungsweise 74. In dem Sperrzustand des Schaltelements 72 sind die Planetenträger 48 und 56 über das Schaltelement 72 drehfest an dem Gehäuse 30 festgelegt, sodass sich die Planetenträger 48 und 56 nicht relativ zu dem Gehäuse 30 drehen können. In dem Offenzustand jedoch gibt das Schaltelement 72 die Planetenträger 48 und 56 frei, sodass sich insbesondere dann, wenn die Getriebevorrichtung 26 angetrieben wird, die Planetenträger 48 und 56 um die Hauptdrehachse relativ zu dem Gehäuse 30 drehen beziehungsweise drehen können. In dem Sperrzustand des Schaltelements 74 ist das Hohlrad 58 mittels des Schaltelements 74 drehfest an dem Gehäuse 30 festgelegt, sodass sich das Hohlrad 58 nicht relativ zu dem Gehäuse 30 drehen kann. In dem Offenzustand jedoch gibt das Schaltelement 74 das Hohlrad 58 frei, sodass ich insbesondere dann, wenn die Getriebevorrichtung 26 angetrieben wird, das Hohlrad 58 um die Hauptdrehachse relativ zu dem Gehäuse 30 drehen kann beziehungsweise dreht.

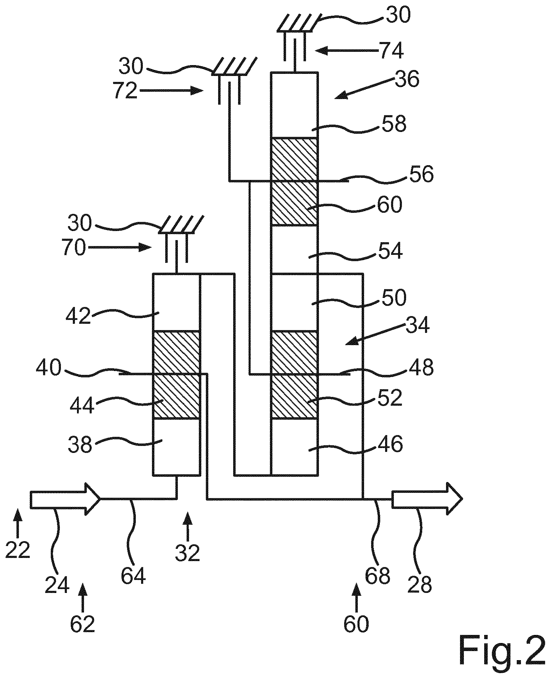

Fig. 2 zeigt eine zweite Ausführungsform der Getriebevorrichtung 26 und somit des elektrischen Antriebs 10, wobei in Fig. 2 der Übersicht wegen die elektrische Maschine 12 und das Rad 14 sowie die Seitenwelle 16 nicht dargestellt sind.

Um insbesondere den axialen Bauraumbedarf der Getriebevorrichtung 26 und somit des elektrischen Antriebs 10 insgesamt besonders gering halten zu können, ist es bei der zweiten Ausführungsform vorgesehen, dass der dritte Planetenradsatz 36 und der zweite Planetenradsatz 34 gestapelt sind. Dabei ist der dritte Planetenradsatz 36 radial außerhalb des zweiten Planetenradsatzes 34 angeordnet, sodass beispielsweise der Planetenradsatz 34 in radialer Richtung der Getriebevorrichtung 26 nach außen hin zumindest teilweise, insbesondere zumindest überwiegend oder vollständig, durch den Planetenradsatz 36 überdeckt ist. Somit ist beispielsweise der Planetenradsatz 34 in axialer Richtung der Getriebevorrichtung 26 zumindest teilweise, insbesondere zumindest überwiegend oder vollständig, in dem Planetenradsatz 36 angeordnet. Ferner ist es bei der zweiten Ausführungsform vorgesehen, dass die Planetenradsätze 34 und 36 in einer gemeinsamen, gedachten Ebene angeordnet sind.

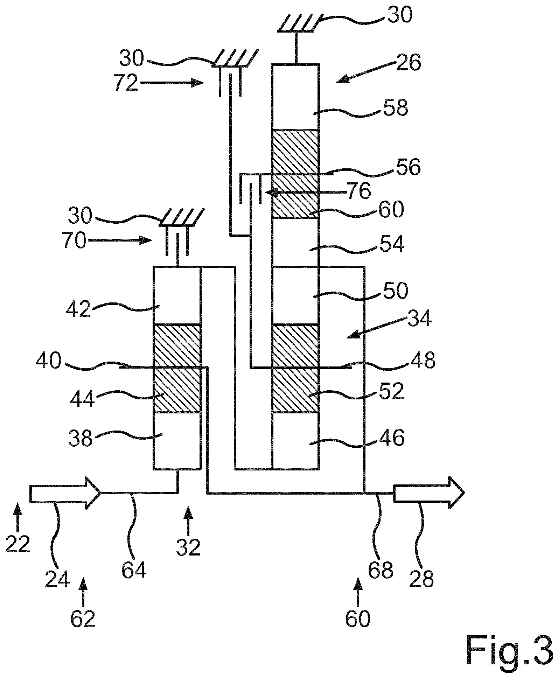

Schließlich zeigt Fig. 3 eine dritte Ausführungsform der Getriebevorrichtung 26 und somit des elektrischen Antriebs 10 insgesamt. Die dritte Ausführungsform entspricht im Grunde der zweiten Ausführungsform beziehungsweise baut auf der zweiten Ausführungsform auf, da auch bei der dritten Ausführungsform die Planetenradsätze 34 und 36 gestapelt sind. Die dritte Ausführungsform unterscheidet sich nun insbesondere dadurch von der zweiten Ausführungsform, dass ein insbesondere schaltbares Kopplungselement 76 vorgesehen ist, mittels welchem der Planetenträger 56 mit dem Planetenträger 48, insbesondere reversibel, drehfest koppelbar ist. Mit anderen Worten, im Unterschied zur ersten Ausführungsform und der zweiten Ausführungsform sind bei der dritten Ausführungsform die Planetenträger 48 und 56 nicht etwa permanent drehfest miteinander gekoppelt, sondern die Planetenträger 48 und 56 können mittels des Kopplungselements 76 reversibel drehfest miteinander gekoppelt werden. Hierzu ist das Kopplungselement 76 zwischen wenigstens einem Kopplungszustand und wenigstens einem Entkopplungszustand verstellbar beziehungsweise umschaltbar oder bewegbar. In dem Kopplungszustand sind die Planetenträger 48 und 56 mittels des Kopplungselements 76 drehfest miteinander gekoppelt beziehungsweise verbunden, sodass beispielsweise dann, wenn die Getriebevorrichtung 26 angetrieben wird, die Planetenträger 48 und 56 gemeinsam und somit als Block um die Hauptdrehachse umlaufen und sich somit relativ zu dem Gehäuse 30 drehen. In dem Entkopplungszustand jedoch gibt das Kopplungselement 76 die Planetenträger 48 und 56 frei, sodass sich insbesondere dann, wenn die Getriebevorrichtung 26 angetrieben wird, die Planetenträger 48 und 56 um die Hauptdrehachse relativ zueinander und relativ zu dem Gehäuse 30 drehen können. Mit anderen Worten sind die Planetenträger 48 und 56 in dem Kopplungszustand des Kopplungselements 76 mittels des Kopplungselements 76 miteinander verblockt. Dabei ist das Kopplungselement vorzugsweise als formschlüssige Kupplung, insbesondere als Klauenkupplung, ausgebildet, sodass die Verluste besonders gering gehalten werden können.

Ein weiterer Unterschied zwischen der ersten beziehungsweise zweiten Ausführungsform und der dritten Ausführungsform ist, dass bei der dritten Ausführungsform das Hohlrad 58 nicht etwa reversibel, sondern permanent drehfest mit dem Gehäuse 30 gekoppelt ist. Somit entfällt beispielsweise bei der dritten Ausführungsform das Schaltelement 74. Bei der dritten Ausführungsform ist mittels des Schaltelements 72 der Planetenträger 48 drehfest an dem Gehäuse 30 festlegbar. Befindet sich beispielsweise das Schaltelement 72 in seinem Sperrzustand, während sich das Kopplungselement 76 in seinem Entkopplungszustand befindet, so ist der Planetenträger 48 mittels des Schaltelements 72 drehfest an dem Gehäuse 30 festgelegt, während sich jedoch der Planetenträger 56 um die Hauptdrehachse relativ zu dem Gehäuse 30 drehen kann beziehungsweise dreht, insbesondere dann, wenn die Getriebevorrichtung 26 angetrieben wird.

Befindet sich beispielsweise das Schaltelement 72 in seinem Sperrzustand, während sich das Kopplungselement 76 in seinem Kopplungszustand befindet, so sind sowohl der Planetenträger 48 als auch der Planetenträger 56 drehfest an dem Gehäuse 30 festgelegt. Befindet sich beispielsweise das Schaltelement 72 in seinem Offenzustand, während sich das Kopplungselement 76 in seinem Entkopplungszustand befindet, so können sich sowohl der Planetenträger 48 als auch der Planetenträger 56 um die Hauptdrehachse relativ zu dem Gehäuse 30 drehen, wobei sich auch die Planetenträger 48 und 56 um die Hauptdrehachse relativ zueinander drehen können.

Insgesamt ist erkennbar, dass die Getriebevorrichtung 26 besonders vorteilhaft als Mehrganggetriebe, insbesondere als Dreiganggetriebe und dabei beispielsweise als Drei-Gang-Struktur ausgebildet werden kann. Insbesondere kann die Getriebevorrichtung 26 als lastschaltfähige Drei-Gang-Struktur beziehungsweise Mehrgangstruktur in koaxialer bauraumoptimaler Weise ausgestaltet werden, wobei die Verlustleistung in einem besonders geringen Rahmen gehalten werden kann. Ferner ist aus den Fig. erkennbar, dass sich drei Fahrgänge, insbesondere schaltfähige und vorzugsweise lastschaltfähige Fahrgänge, der Getriebevorrichtung 26 darstellen können, wobei die Fahrgänge für Vorwärts- und Rückwärtsfahrt verwendbar sind. Ein erster der Fahrgänge soll einen Anhängerbetrieb ermöglichen. Außerdem ist beispielsweise der erste Fahrgang für Kriechvorgänge vorgesehen, um die elektrische Maschine 12 und deren Leistungselektronik vor Überhitzung schützen zu können. Mindestens eines der Schaltelemente 70, 72 und 74 kann gegebenenfalls als Klauenkupplung mit oder ohne Synchronisiereinheit ausgestaltet werden, um eine weitere Verlustreduktion realisieren zu können. Durch geschickte Kopplung der Planetenradsätze 32, 34 und 36 und durch geschickten Einsatz der Schaltelemente 70, 72 und 74 können vorteilhafte Gänge auf bauraum- und gewichtsgünstige Weise realisiert werden. Des Weiteren können Relativdrehzahlen in den Planetenradsätzen 32, 34 und 36 besonders gering gehalten werden. Außerdem sind die Schaltelemente 70, 72 und 74 besonders gut zugänglich, insbesondere dann, wenn sie als reibschlüssige Kupplungen ausgebildet sind. Außerdem kann durch Mehrgängigkeit der Getriebevorrichtung 26 die Drehzahl der elektrischen Maschine 12, insbesondere des Rotors 20, auch bei hohen Geschwindigkeiten besonders gering gehalten werden.

Um die Teileanzahl, den Bauraumbedarf, die Kosten und das Gewicht besonders gering zu halten, ist es beispielsweise vorgesehen, insbesondere bei der zweiten und dritten Ausführungsform, dass das Hohlrad 50 eine Außenverzahnung aufweist, durch welche das Sonnenrad 54 gebildet ist.

Die bei der ersten Ausführungsform und bei der zweiten Ausführungsform vorgesehene, permanente beziehungsweise feste Verbindung der Planetenträger 48 und 56 kann bei der dritten Ausführungsform durch den Einsatz des Kopplungselements 76 getrennt werden, wobei dann vorzugsweise das Hohlrad 58 permanent drehfest an das Gehäuse 30 angebunden ist. Dadurch können beispielsweise gleiche Übersetzungen gewährleistet werden. Insbesondere können die folgenden Vorteile realisiert werden:
- sehr geringe Drehzahlen, wodurch Schleppverluste besonders gering gehalten werden können
- koaxiale Anordnung
- sehr gute Stapelungsmöglichkeit
- es können drei Gänge mit Hilfe von nur drei Schaltelementen realisiert werden
- alle Schaltelemente können als Bremsen ausgebildet und dadurch sehr gut zugänglich sein
- zwei der Schaltelemente können als formschlüssige Kupplungen ausgeführt werden, wenn beispielsweise im zweiten Fahrgang angetrieben wird
- der erste Fahrgang kann als Kriech- oder Schwerlastgang ausgestaltet werden
- gute Verzahnungswirkungsgrade sind realisierbar, da eine Gesamtübersetzung durch den jeweiligen Radsatz erfolgt, sodass keine weiteren Verzahnungsverluste durch ein Stirnraddifferential auftreten
- Drehzahldifferenzen in den beispielsweise als Klauenschaltelementen ausgebildeten Schaltelementen 70, 72 und 74 können besonders gering gehalten werden, sodass eine einfache Synchronisation darstellbar ist.

## Patentansprüche

1. Getriebevorrichtung (26) für einen elektrischen Antrieb (10) eines Kraftfahrzeug, mit einem Gehäuse (30), mit drei in dem Gehäuse (30) angeordneten Planetenradsätzen (32, 34, 36), welche jeweils ein Sonnenrad (38, 46, 54), einen Planetenträger (40, 48, 56) und ein Hohlrad (42, 50, 58) aufweisen, mit einer von einem Rotor (20) einer elektrischen Maschine (12) antreibbaren Eingangswelle (64), und mit einer Ausgangswelle (68), mittels welcher wenigstens ein Rad (14) des Kraftfahrzeugs antreibbar ist, wobei:
- wenigstens ein erstes Schaltelement (70) vorgesehen ist, mittels welchem das Hohlrad (42) eines ersten der Planetenradsätze (32, 34,36) an dem Gehäuse (30) festlegbar ist,
- das Hohlrad (42) des ersten Planetenradsatzes (32) permanent drehfest mit dem Sonnenrad (46) eines zweiten der Planetenradsätze (32, 34,36) gekoppelt ist; und
- das Hohlrad (50) des zweiten Planetenradsatzes (34) permanent drehfest mit dem Planetenträger (40) des ersten Planetenradsatzes (32) gekoppelt ist;
**dadurch gekennzeichnet, dass**
- das Sonnenrad (54) des dritten Planetenradsatzes (36) permanent drehfest mit dem Hohlrad (50) des zweiten Planetenradsatzes (34) und permanent drehfest mit der Ausgangswelle (68) gekoppelt ist,
- ein zweites Schaltelement (72) vorgesehen ist, mittels welchem der Planetenträger (48) des zweiten Planetenradsatzes (34) an dem Gehäuse (30) festlegbar ist,
- das Sonnenrad (38) des ersten Planetenradsatzes (32) permanent drehfest mit der Eingangswelle (64) gekoppelt ist,
- der Planetenträger (56) des dritten Planetenradsatzes (36) permanent drehfest mit dem Planetenträger (48) des zweiten Planetenradsatzes (34) gekoppelt oder koppelbar ist.

2. Getriebevorrichtung (26) nach Anspruch 1,
**dadurch gekennzeichnet, dass**
das erste Schaltelement (70) als reibschlüssige Kupplung ausgebildet ist.

3. Getriebevorrichtung (26) nach Anspruch 1 oder 2,
**dadurch gekennzeichnet, dass**
das zweite Schaltelement (72) als formschlüssige Kupplung ausgebildet ist.

4. Getriebevorrichtung (26) nach einem der vorhergehenden Ansprüche,
**dadurch gekennzeichnet, dass**
ein weiteres Schaltelement (74) vorgesehen ist, mittels welchem das Hohlrad (58) des dritten Planetenradsatzes (36) an dem Gehäuse (30) festlegbar ist.

5. Getriebevorrichtung (26) nach Anspruch 4,
**dadurch gekennzeichnet, dass**
das weitere Schaltelement (74) als formschlüssige Kupplung ausgebildet ist.

6. Getriebevorrichtung (26) nach einem der vorhergehenden Ansprüche,
**dadurch gekennzeichnet, dass**
ein Kopplungselement (76) vorgesehen ist, mittels welchem der Planetenträger (56) des dritten Planetenradsatzes (36) mit dem Planetenträger (48) des zweiten Planetenradsatzes (34) koppelbar ist.

7. Getriebevorrichtung (26) nach Anspruch 6,
**dadurch gekennzeichnet, dass**
das Hohlrad (58) des dritten Planetenradsatzes (36) permanent drehfest mit dem Gehäuse (30) gekoppelt ist.

8. Getriebevorrichtung (26) nach Anspruch 6 oder 7,
**dadurch gekennzeichnet, dass**
das Kopplungselement (76) als formschlüssige Kupplung ausgebildet ist.

9. Getriebevorrichtung (26) nach einem der vorhergehenden Ansprüche,
**dadurch gekennzeichnet, dass**
der dritte Planetenradsatz (36) radial außerhalb des zweiten Planetenradsatzes (34) angeordnet ist und/oder dass der zweite Planetenradsatz (34) und der dritte Planetenradsatz (36) in einer Ebene angeordnet sind.

10. Elektrischer Antrieb (10) für ein Kraftfahrzeug mit einer Getriebevorrichtung (26) nach Anspruch 1,
**gekennzeichnet durch**
wenigstens eine elektrische Maschine (12), welche einen Rotor (20) aufweist.

11. Elektrischer Antrieb (10) nach Anspruch 10,
**dadurch gekennzeichnet, dass**
eine zu einem Rad (14) des Kraftfahrzeugs führende Seitenwelle (16) koaxial zu einer zentralen Drehachse (22) der Getriebevorrichtung (26) angeordnet ist.

## Claims

1. Transmission device (26) for an electric drive (10) of a motor vehicle, having a housing (30), having three planetary gear sets (32, 34, 36), which are arranged in the housing (30) and which each comprise a sun gear (38, 46, 54), a planet carrier (40, 48, 56) and a ring gear (42, 50, 58), having an input shaft (64), which can be driven by a rotor (20) of an electric machine (12), and having an output shaft (68), by means of which at least one wheel (14) of the motor vehicle can be driven, wherein:
- at least one first shifting element (70) is provided, by means of which the ring gear (42) of a first of the planetary gear sets (32, 34, 36) can be secured to the housing (30),
- the ring gear (42) of the first planetary gear set (32) is permanently coupled to the sun gear (46) of a second of the planetary gear sets (32, 34, 36) for conjoint rotation therewith; and
- the ring gear (50) of the second planetary gear set (34) is permanently coupled to the planet carrier (40) of the first planetary gear set (32) for conjoint rotation therewith;
**characterised in that**
- the sun gear (54) of the third planetary gear set (36) is permanently coupled to the ring gear (50) of the second planetary gear set (34) for conjoint rotation therewith and permanently coupled to the output shaft (68) for conjoint rotation therewith,
- a second shifting element (72) is provided, by means of which the planet carrier (48) of the second planetary gear set (34) can be secured to the housing (30),
- the sun gear (38) of the first planetary gear set (32) is permanently coupled to the input shaft (64) for conjoint rotation therewith,
- the planet carrier (56) of the third planetary gear set (36) is or can be permanently coupled to the planet carrier (48) of the second planetary gear set (34) for conjoint rotation therewith.

2. Transmission device (26) according to claim 1,
**characterised in that**
the first shifting element (70) is designed as a friction clutch.

3. Transmission device (26) according to claim 1 or 2,
**characterised in that**
the second shifting element (72) is designed as a positive clutch.

4. Transmission device (26) according to any of the preceding claims,
**characterised in that**
another shifting element (74) is provided, by means of which the ring gear (58) of the third planetary gear set (36) can be secured to the housing (30).

5. Transmission device (26) according to claim 4,
**characterised in that**
the other shifting element (74) is designed as a positive clutch.

6. Transmission device (26) according to any of the preceding claims,
**characterised in that**
a coupling element (76) is provided, by means of which the planet carrier (56) of the third planetary gear set (36) can be coupled to the planet carrier (48) of the second planetary gear set (34).

7. Transmission device (26) according to claim 6,
**characterised in that**
the ring gear (58) of the third planetary gear set (36) is permanently coupled to the housing (30) in a rotationally fixed manner.

8. Transmission device (26) according to claim 6 or 7,
**characterised in that**
the other coupling element (76) is designed as a positive clutch.

9. Transmission device (26) according to any of the preceding claims,
**characterised in that**
the third planetary gear set (36) is arranged radially outside the second planetary gear set (34)
and/or **in that** the second planetary gear set (34) and the third planetary gear set (36) are arranged in one plane.

10. Electric drive (10) for a motor vehicle having a transmission device (26) according to claim 1, **characterised by**
at least one electric machine (12), which comprises a rotor (20).

11. Electric drive (10) according to claim 10,
**characterised in that**
a lateral shaft (16) that leads to a wheel (14) of the motor vehicle is arranged coaxially with a central axis of rotation (22) of the transmission device (26).

## Revendications

1. Dispositif de transmission (26) pour un entraînement électrique (10) d'un véhicule automobile, avec un logement (30), avec trois ensembles de roues planétaires (32, 34, 36) disposés dans le logement (30) qui présentent chacun une roue solaire (38, 46, 54), une cage de transmission planétaire (40, 48, 56) et une roue creuse (42, 50, 58), avec un arbre d'entrée (64) pouvant être entraîné par un rotor (20) d'un moteur électrique (12), et avec un arbre de sortie (68) au moyen duquel au moins une roue (14) du véhicule automobile peut être entraînée, dans lequel :
- au moins un premier élément de commutation (70) est prévu, au moyen duquel la roue creuse (42) d'un premier des ensembles de roues planétaires (32, 34, 36) peut être fixée au logement (30),
- la roue creuse (42) du premier ensemble de roues planétaires (32) est accouplée de manière permanente fixe en rotation à la roue solaire (46) d'un deuxième des ensembles de roues planétaires (32, 34, 36) ; et
- la roue creuse (50) du deuxième ensemble de roues planétaires (34) est accouplée de manière permanente fixe en rotation à la cage de transmission planétaire (40) du premier ensemble de roues planétaires (32) ;
**caractérisé en ce que**
- la roue solaire (54) du troisième ensemble de roues planétaires (36) est accouplée de manière permanente fixe en rotation à la roue creuse (50) du deuxième ensemble de roues planétaires (34) et de manière permanente fixe en rotation à l'arbre de sortie (68),
- un deuxième élément de commutation (72) est prévu, au moyen duquel la cage de transmission planétaire (48) du deuxième ensemble de roues planétaires (34) peut être fixée au logement (30),
- la roue solaire (38) du premier ensemble de roues planétaires (32) est accouplée de manière permanente fixe en rotation à l'arbre d'entrée (64),
- la cage de transmission planétaire (56) du troisième ensemble de roues planétaires (36) est accouplée ou peut être accouplée de manière permanente fixe en rotation à la cage de transmission planétaire (48) du deuxième ensemble de roues planétaires (34).

2. Dispositif de transmission (26) selon la revendication 1,
**caractérisé en ce que**
le premier élément de commutation (70) est réalisé en tant qu'accouplement entraîné par friction.

3. Dispositif de transmission (26) selon la revendication 1 ou 2,
**caractérisé en ce que**
le deuxième élément de commutation (72) est réalisé en tant qu'accouplement à conjugaison de formes.

4. Dispositif de transmission (26) selon une des revendications précédentes, **caractérisé en ce que**
un autre élément de commutation (74) est prévu, au moyen duquel la roue creuse (58) du troisième ensemble de roues planétaires (36) peut être fixée au logement (30).

5. Dispositif de transmission (26) selon la revendication 4,
**caractérisé en ce que**
l'autre élément de commutation (74) est réalisé en tant qu'accouplement à conjugaison de formes.

6. Dispositif de transmission (26) selon une des revendications précédentes, **caractérisé en ce que**
un élément d'accouplement (76) est prévu, au moyen duquel la cage de transmission planétaire (56) du troisième ensemble de roues planétaires (36) peut être accouplée à la cage de transmission planétaire (48) du deuxième ensemble de roues planétaires (34).

7. Dispositif de transmission (26) selon la revendication 6,
**caractérisé en ce que**
la roue creuse (58) du troisième ensemble de roues planétaires (36) est accouplée de manière permanente fixe en rotation au logement (30).

8. Dispositif de transmission (26) selon la revendication 6 ou 7,
**caractérisé en ce que**
l'élément d'accouplement (86) est réalisé en tant qu'accouplement à conjugaison de formes.

9. Dispositif de transmission (26) selon une des revendications précédentes, **caractérisé en ce que**
le troisième ensemble de roues planétaires (36) est disposé radialement en dehors du deuxième ensemble de roues planétaires (34) et/ou que le deuxième ensemble de roues planétaires (34) et le troisième ensemble de roues planétaires (36) sont disposés dans un plan.

10. Entraînement électrique (10) pour un véhicule automobile avec un dispositif de transmission (26) selon la revendication 1,
**caractérisé par**
au moins un moteur électrique (12) qui présente un rotor (20).

11. Entraînement électrique (10) selon la revendication 10,
**caractérisé en ce que**
un arbre latéral (16) menant à une roue (14) du véhicule automobile est disposé de manière coaxiale à un axe de rotation central (22) du dispositif de transmission (26).
